# EUROPEAN PATENT SPECIFICATION

(11) **EP 2 306 356 B1**
(45) Date of publication and mention of the grant of the patent: **27.02.2019**
(21) Application number: 10176515.4
(22) Date of filing: 14.09.2010
(51) Int. Cl.: G06F 21/55, G06F 21/56

(54) **Asynchronous processing of events for malware detection**
Asynchrone Ereignisverarbeitung zur Malware-Erkennung
Traitement asynchrone d'événements pour la détection de programme malveillant

(30) Priority: 01.10.2009 RU 2009136239; 01.10.2009 RU 2009136240; 13.11.2009 US 618521
(43) Date of publication of application: 06.04.2011
(73) Proprietor: Kaspersky Lab, ZAO, Moscow 125212 (RU)
(72) Inventor: Martynenko, Vladislav V., 123060, Moscow (RU); Sobko, Andrey V., 123060, Moscow (RU)
(74) Representative: Sloboshanin, Sergej

(56) References cited:
- WO-A2-2007/003916
- US-A1- 2007 079 375
- US-A1- 2008 022 407
- US-A1- 2008 201 778
- US-A1- 2008 256 622
- US-A1- 2009 089 040
- US-B1- 6 973 577
- US-B1- 7 681 237
- US-B2- 7 340 774

## Description

### Background of the Invention

### Field of the Invention

The present invention is related to a method for asynchronous processing of system events on a computer system, and more particularly, to malware detection based on the behavior of applications running on a computer system.

### Description of the Related Art

Detection of viruses and malware has been a concern throughout the era of the personal computer. With the growth of communication networks such as the Internet and increasing interchange of data, including the rapid growth in the use of e-mail for communications, the infection of computers through communications or file exchanges is an increasingly significant consideration. Infections take various forms and are typically related to computer viruses, Trojan programs or other forms of malicious code (i.e., malware).

Recent incidents of e-mail mediated virus attacks have been dramatic both for the speed of propagation and for the extent of damage, with Internet service providers (ISPs) and companies suffering from service problems and a loss of e-mail capability. In many instances, attempts to adequately prevent file exchange or e-mail mediated infections significantly inconvenience computer users. Improved strategies for detecting and dealing with virus attacks are desired.

A conventional approach to detecting viruses is signature scanning. Signature scanning systems use sample code patterns extracted from the known malware code and scan for the occurrence of these patterns in another program code. A primary limitation of the signature scanning method is that only the known malicious code is detected, that is, only the code that matches the stored sample signatures of known malicious code is identified as being infected. All viruses or malicious code not previously identified, and all viruses or malicious code created after the last update of the signature database will not be detected.

Another conventional approach is emulation of malware components. An ability to emulate an execution of a suspected malware component on a computer system prior to executing it on a user system is critical in terms of providing security and maintaining integrity of a computer system data. Emulation is typically used for anti-virus and malware detection. In order to analyze the behavior of malware components, such as viruses, and to collect statistics (heuristics), a computer system is emulated and the viruses are run on the emulated computer system. The behavior of the suspected component during emulation is logged. The behavior log is later compared to normal behavior patterns.

However, over the past decade malware components and viruses have become more sophisticated. Modern malware components can avoid emulation. Additionally, heuristic analyses of a potential malware component cannot always be performed in a timely manner.

Event interception and on-the-fly synchronous analysis can also be used. For example, such a system is disclosed in the WO2008048665A2. However, a synchronous analysis delays the execution of the process generating the suspicious event. In turn, it causes a delay in functionality of the entire system.

US 2008/0201778 A1 discloses a method of automatically detecting when the security of a computer system has been compromised, wherein this method includes the following steps: monitoring predetermined systems calls employed by the operating system of the computer, collecting and storing data from said monitoring step, processing said collected data using at least one trained model and using said model to generate at least one likelihood score indicative of whether the system calls being monitored were produced by a computer system whose security has been compromised and, using said likelihood score to produce an instruction detection measure.

US 2008/0022407 A1 teaches a method for detecting malicious activities in a processing system. The method comprises the steps of intercepting activities in a processing system, filtering the intercepted activities in accordance with filter rules in order to discriminate suspicious activities from non-suspicious activities, and further analyzing the filtered suspicious activities in order to determine if the suspicious activities are malicious or not. The analysis of the filtered suspicious activities does not necessarily need to be performed in real time.

US 6,973,577 teaches a computer virus detection technique for associative behavioural analysis of runtime execution state within a defined computing environment is. Each system call is intercepted and compared against a list of monitored events. If the system call matches one of the monitored events, it is further determined whether the application is performing a sequence of suspicious actions characteristic of computer viruses.

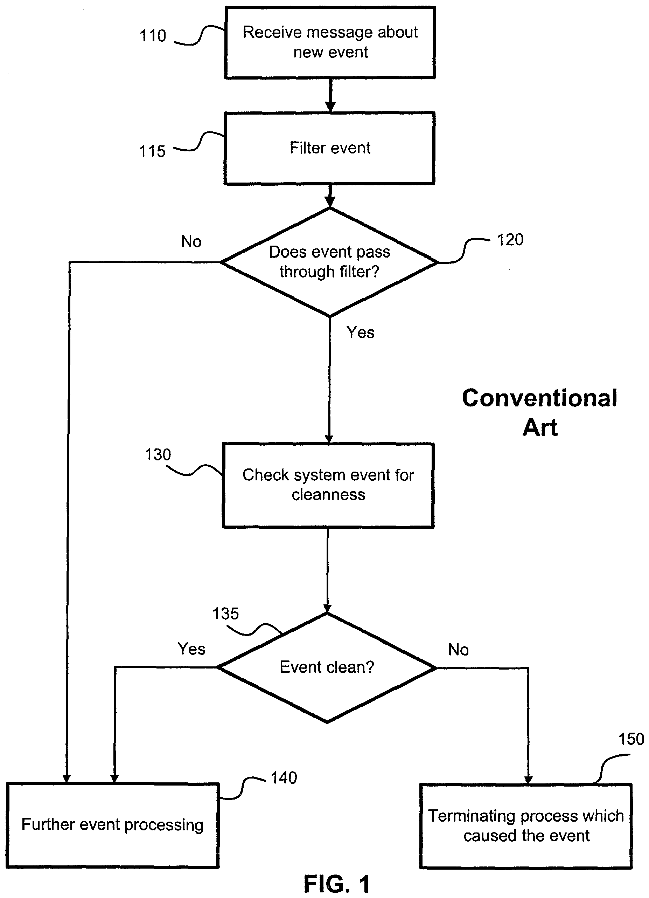

Event filtering techniques are also used for analyzing the behavior of running suspicious applications. For example, such a method is described in the US 7,406,199. The processes generating suspicious events which have been filtered out are checked first and then sent for further processing. An algorithm of a conventional filtering method, using a synchronous event processing, is depicted in **FIG. 1****.**

In this method, an event is sent for processing after the process which triggered the event has been checked. After an occurrence of a system event is detected in real time, in step **110,** a system driver processes the event through a number of filters in step **115.** If the event passes through the filter(s) in step **120,** the event is sent to be checked by system modules in step **130.**

If in step **135,** it is determined that the event is not clean (i.e., presents a potential threat to the system), the process that caused the event is terminated in step **150.** If the event is determined to be clean (in step **135**) or the event does not pass through the filter (in step **120**), the event is released for further processing in step **140.** This method is time consuming and requires a lot of system resources, which is also quite costly.

It is apparent that an improved efficient method for analyzing the behavior of applications running on a computer system is desired. Accordingly, there is a need in the art for a system and method that addresses the need for detection of malware based on the behavior of applications running on a computer system.

### Summary of the Invention

The present invention is intended as a method and system for malware detection based on the behavior of applications running on a computer system that substantially obviates one or several of the disadvantages of the related art.

In one aspect of the invention, there is provided a system and a method for malware detection based on a behavior of applications running on a computer system, including: asynchronous processing of system events for malware threat analyses using application filters; analyzing events using heuristic and signature data; analyzing applications behavior and detecting abnormal behavior of "clean" applications; automatically classifying applications (i.e., detecting new versions) based on the behavior analysis; automatically analyzing the reliability of web sites based on the behavior triggered by the web site accesses; in enterprise networks, detecting abnormalities in configuration of user computer systems; recognizing a user by his behavior profile and using the profile for an automatic configuration of user applications.

The malicious object (i.e., component) can be, for example, a trojan, a virus, a rootkit or a worm. According to an exemplary embodiment, the existing methods of malware detection are accelerated. In one aspect, the system events are processed asynchronously and the applications generating the events are analyzed in terms of being malicious. The proposed method allows comparing the behavior of an application against a set of rules defining a sequence of the normal system activities. Each rule defines a set of actions of a trusted application and actions of malware components. Therefore, a proposed method optimizes processing of a malware threat and increases probability of malware detection.

Additional features and advantages of the invention will be set forth in the description that follows, and in part will be apparent from the description, or may be learned by practice of the invention. The advantages of the invention will be realized and attained by the structure particularly pointed out in the written description and claims hereof as well as the appended drawings.

It is to be understood that both the foregoing general description and the following detailed description are exemplary and explanatory and are intended to provide further explanation of the invention as claimed.

### Brief Description of the Attached Figures

The accompanying drawings, which are included to provide a further understanding of the invention and are incorporated in and constitute a part of this specification, illustrate embodiments of the invention and, together with the description, serve to explain the principles of the invention.

In the drawings:
**FIG. 1** illustrates a conventional method for malware detection using synchronous processing of system events;
**FIG. 2** illustrates a system for malware detection, in accordance with an exemplary embodiment;
**FIG. 3** illustrates an algorithm for asynchronous event processing, in accordance with the exemplary embodiment;
**FIG. 4** illustrates an algorithm for asynchronous processing of system events by a stream scanner, in accordance with the exemplary embodiment;
**FIG. 5** illustrates event handling in an AV module, in accordance with the exemplary embodiment;
**FIG. 6** illustrates a method for updating the white and black lists, in accordance with the exemplary embodiment;
**FIG. 7** illustrates detection of malicious web sites, in accordance with the exemplary embodiment;
**FIG. 8** illustrates detection of abnormalities in network configurations, in accordance with the exemplary embodiment;
**FIG. 9** illustrates an example of different levels of user settings used for working with AV application, in accordance with the exemplary embodiment;
**FIG. 10** illustrates a schematic of an exemplary computer system on which the invention can be implemented.

### Detailed Description of the Preferred Embodiments

Reference will now be made in detail to the preferred embodiments of the present invention, examples of which are illustrated in the accompanying drawings.

In one aspect of the invention, there is provided a system and a method for malware detection based on behavior of applications running on a computer system.

According to the exemplary embodiment, the existing methods of malware detection are accelerated. The events are processed asynchronously and the applications generating the events are analyzed in terms of being malicious. The asynchronous processing of the events allows to process the events caused by processes (i.e., applications) while these processes continue to run on a computer system. According to the proposed method the behavior of an application can be compared against a set of rules defining a sequence of the normal system activities (i.e., behavior patterns). Each rule defines a set of actions of a trusted application and the actions of malware components.

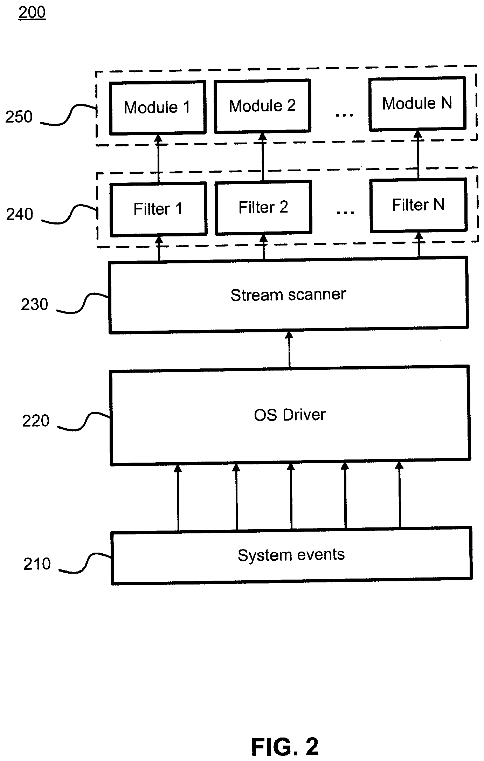

**FIG. 2** illustrates a system **200** for malware detection, in accordance with the exemplary embodiment. An OS driver **220** controls execution of application modules 250 via a stream scanner **230.** The applications can be, for example, a HIPS (Host Intrusion Prevention System), a PDM (Proactive Defence Module, intended to detect malware based on their behavior - the behavior of the software is compared to a particular template, and if the behavior corresponds to the template, the user is given a warning, and, if necessary, further activity of the application is blocked, and any system changes made by the application are rolled back), a firewall, web AV (antivirus), mail AV, traffic AV, script AV, emulator, etc. The OS driver **220** also communicates with other anti-virus (AV) components through the stream scanner **230.** The stream scanner **230** allows the OS driver **220** to create and configure filters **240** for application modules **250.** Each application module **250** can have its own filter **240** for a particular application. Note that the filters **240** allow through the core system events **210** (such as system calls for file creation, call for reading registry, etc.)

After the OS driver **220** intercepts the new event **210,** it passes the event **210** to the stream scanner **230,** which puts the event **210** through the filters **240.** If the event **210** passes through at least one filter **240,** the stream scanner **230** copies the event **210** and places it in a queue of events to be processed by application modules **250.** Then, the original event **210** is released for further processing.

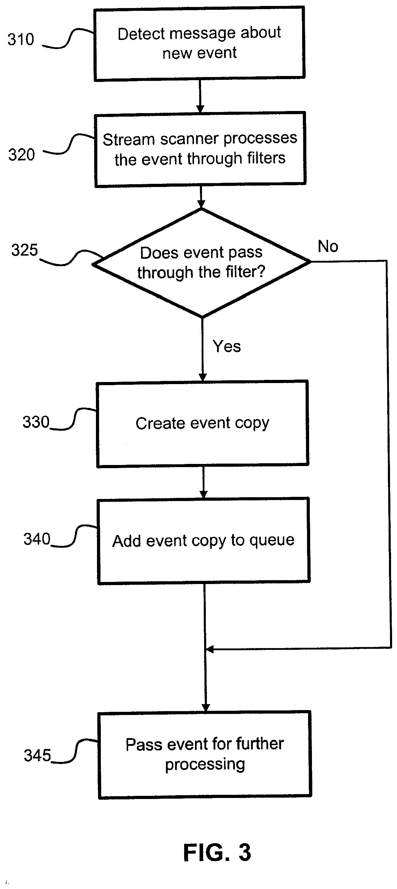

An algorithm of asynchronous event processing is shown in **FIG. 3****.** After an occurrence of a system event is detected in step **310,** it is intercepted by the system driver for processing it through a number of filters of different system modules in step **320.** If the event passes through the filter(s) in step **325,** a copy of the event is created in step **330.** The copy of the event is added to the event queue in step **340.** Then the original event is released for further processing in step **345.** If, in step **325,** the event does not pass through at least on of the filters (i.e., does not match a filtering security criteria) it is sent for further processing in step **345.**

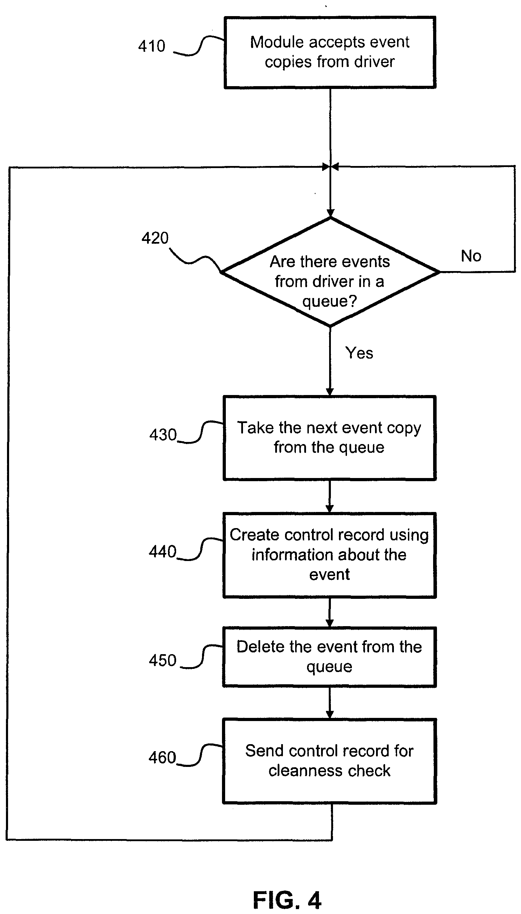

**FIG. 4** illustrates an algorithm for asynchronous processing of the system events by a stream scanner. At certain time intervals, each system module checks, in step **410,** for events passed through its filter and placed in a queue. If an event is detected in step **420,** the system module makes a copy of the event for processing in step **430.** During processing, the event is converted into a control record in step **440.** Then, the copy of the event is removed from the queue in step **450.** The control record is passed to the anti-virus utility for an AV check in step **460.** If the AV check reveals a malicious nature of the event, the process that caused the event, is blocked and terminated.

The event processing is asynchronous. The event is released and the process, which caused the event, continues its uninterrupted execution. Thus, the system does not stop any processes and malware check is performed without being noticed by a system user. While reaction of the OS core system to a malware process is delayed, compared to a synchronous event processing, the delay is a very short period of time and the malicious process cannot harm the computer. The harm caused by malware process during the delay period can be easily compensated by roll backs, incremental backups (snapshots), virtual copies etc. Therefore, the proposed method optimizes functionality of the computer system.

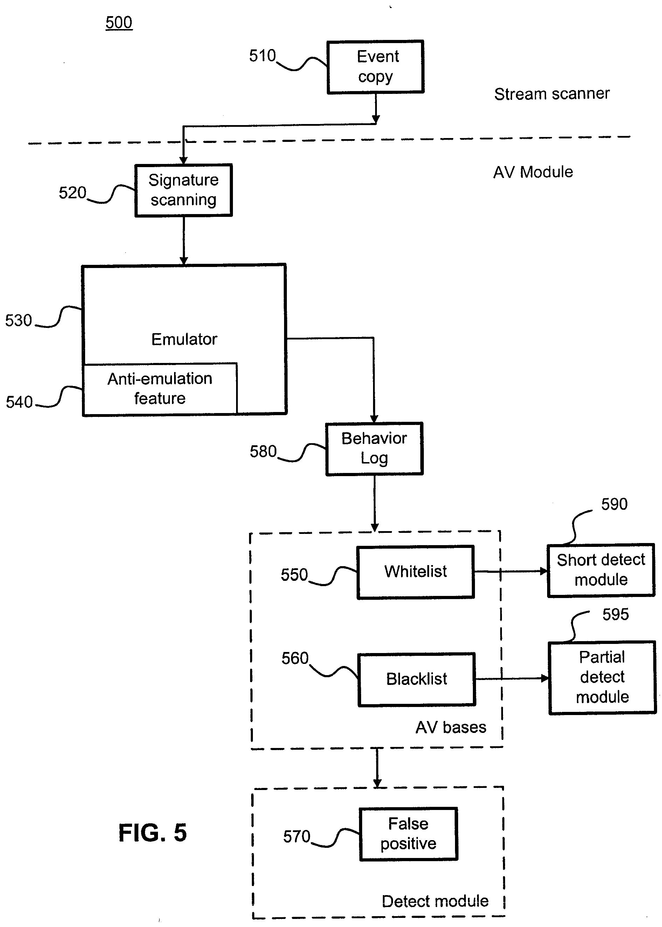

**FIG. 5** illustrates event handling in an AV module, in accordance with the exemplary embodiment. The event copy is received by the stream scanner in step **510.** Then methods of signature scanning **520** and heuristic detection **580** are applied. The signature scanning **520,** in the exemplary embodiment, can use short signatures (i.e., behavior characteristics taken over a short period of time) for malware detection. These signatures can reflect, for example, a combination with an IP address or creation of a file in system directory. A life of a signature or a security level can also be pre-set.

A suspicious process is executed in an emulator **530.** While the emulator **530** uses the anti-emulation feature **540,** it can still be deceived by some modern malware processes. These processes change its execution algorithm, once they detect that they are being executed on the emulator. This problem is solved by generating a behavior log **580** of a suspicious process. Combination of the behavior log **580** and signature scanning **520** allows generation of a white list **550** and a black list **560** AV records. The black list **560** and the white list **550** are analyzed for collisions by a false positive utility **570** of a detect module.

The white lists are the lists of known "clean" software components, links, libraries and other clean objects. In order to compare a suspect object against the white list, hash values can be used. For example, a white list can consist of hashes of known "clean" applications. Also, checksums can be calculated and compared against the known checksums. A black list is a collection of known malware objects. In order to be effective, the white lists and the black lists have to be constantly updated. The proposed system can be used for updating the white and black lists.

Based on a short time behavior detection, the white list **550** can contain "short time detect" modules **590,** the modules that are detected based on their behavior statistics collected over a short period of time. These modules can have the following behavior patterns: writing into a new branch of a registry, loading a certain library, reading from the system registry, etc.

The black list **560** can contain "partial detect" modules **595.** These are components that could not be definitively determined to be malware. These modules can have the following behavior patterns: self-copying, registration in the system registry, copying into a system folder, etc.

The data from the white list **550** and the black list **560** is not normally shown to a user. Instead, it is sent, by the AV application installed on the user system, to an AV lab. Then, the data is added to the global white and black lists respectively for further research of suspicious processes.

The anti-emulator feature works as follows:
The first thing that a malicious program might try to do is to determine whether it is running under an emulator. This can happen, for example by (a) initiating a "rare" system API call, knowing in advance what the return value of the API call should be. If this API call is not supported by the emulator, then the return value is not what a "live" system would return. The malicious program would then conclude that it is running under an emulator. Another common approach is (b) invoking an undocumented system or invoking a standard API but with unusual or borderline parameters. If the emulator does not support this undocumented API or these parameters, then the return result will not be the same as with a "live" system. The malicious program will therefore know that it is running under an emulator. In that case, it will terminate its activity without performing any malicious acts. On the other hand, if it believes that it is running on a "live" system, it will feel free to perform malicious acts.

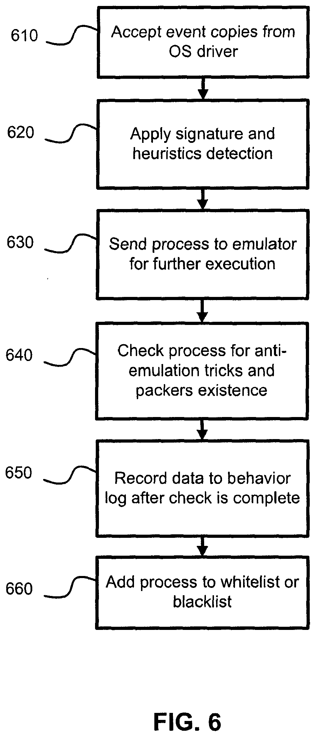

A method for updating the white and black lists using asynchronous event processing is illustrated in **FIG. 6****.** It step **610,** an event (suspicious object) copy is received from the stream scanner. Signature and heuristic detection methods are applied to the event copy in step **620.** The process, which caused the event, is sent to an emulator for further analysis in step **630.** The process is checked for anti-emulation features and packers in step **640.** Then, the heuristic data is recorded into a behavior log in step **650.** The process is classified as "clean" or malicious and is added to either white or black list, accordingly (in step **660**).

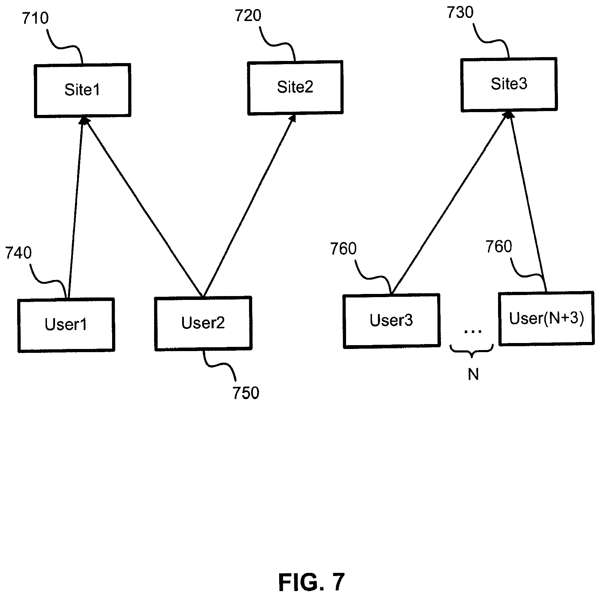

**FIG. 7** illustrates dealing with potentially malicious web sites. Detection and quick reaction to malicious web sites is important. The main criterion of a potentially malicious web site is a massive number of accesses from different users over a short period of time. **FIG. 7** illustrates an example of monitoring a number of sites over a short period of time. Sites **710** and **720** are the sites working in a normal mode, i.e., being accessed by a normal number of users **740** and **750.** Site **730** has an abnormal number of site accesses by N number of users **760.** If the number of users N exceeds a certain limit, the site **730** can be considered malicious.

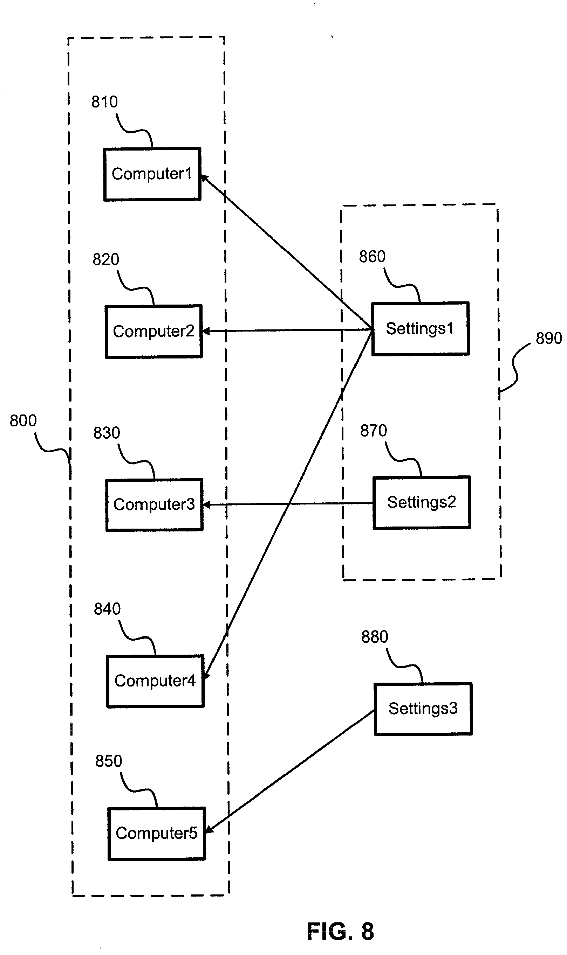

In another embodiment, abnormalities within network configurations can be used for malware detection. **FIG. 8** illustrates detection of abnormalities in the network configurations. A corporate network **800** including computer systems **810 - 850** is monitored. A set of computer configurations (settings) **890,** including subsets of settings of different security levels **(860** and **870),** allows to detect abnormalities of the network **800.** For example, if a computer system **850** has configurations **880,** that are not included in an allowed set of configuration settings **890,** it can be concluded that the computer system **850** is infected (or is being used against network policy).

Using the abnormalities detection method, the behavior of a network user can also be monitored. A set of heuristic data can be created for each network user. An abnormal behavior of a particular network user can trigger certain limitations (i.e., user access rights and policies can be revoked). While monitoring the network, the AV application can create backups, incremental backups, snapshots and roll back points for stronger network protection.

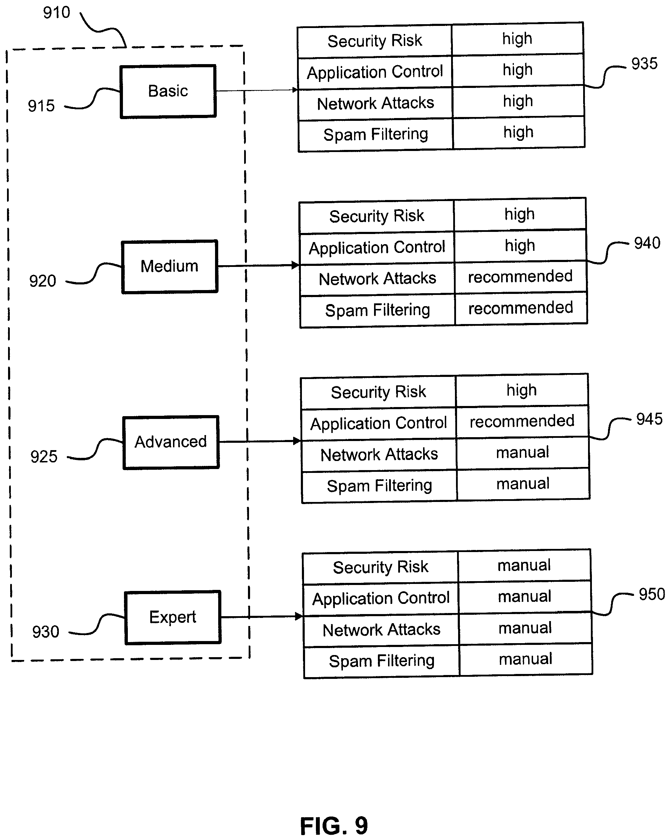

Based on recorded user behavior patterns, some default setting can be assigned to a user for working with the AV application. Different levels of user settings are depicted in **FIG. 9****.** For example, while choosing AV settings **910,** a user can select basic settings **915,** medium settings **920,** advanced settings **925,** and expert settings **930.** For each of these settings the following security types are assigned:
Security Risk components for threat detection and system monitoring, which monitor file system, web clients and web activities of a user;
Application Control, which controls execution of running applications and blocks execution of dangerous operations;
Network Attacks, which prevents attacks on the network;
Spam Filtering, intended for protection from spam.

The protection levels can be high, recommended level, and manual security configurations. "High" uses previously setup parameters intended for an inexperienced user and requiring a significant degree of protection. "Recommended" refers to an average user, with somewhat lower degree of protection. "Manual" gives the user complete freedom to change the settings of the application. Those of ordinary skill in the art will appreciate that the proposed system and method optimize functionality of a computer system by asynchronous processing of the events without any interruption of execution of the processes that caused the events.

Note that a common situation is a new version of a legitimate program that behaves similar to the old version, but has some new functionality. The new version is not yet added to the database of the legitimate programs. The new version is initially treated as unknown, but may be initially viewed as malicious, since it first downloads a downloader, and then downloads the rest of the program. However, based on the fact that the previous version wrote the same registry keys, performed many of the same functions as the new version, etc., the new version will be classified as non-malicious.

For example, consider the Opera browser version 9.5.1 and 9.5.2. Some of the differences are as follows (see portions of the log below, differences shown in bold, note also that this is a small fraction of the actual log, with most of the rest of the logs being identical):

| **Opera 9.5.1** | **Unknown program (probably new version of Opera)** |
|---|---|
| \Device\HarddiskVolume1\Documents and Settings\kulich\Local Settings\Application Data\Opera\Opera\profile\opcache\assoc\ \Device\HarddiskVolume1\Documents and Settings\kulich\Local Settings\Application Data\Opera\Opera\profile\vps\ | \Device\HarddiskVolume1\Documents and Settings\kulich\Local Settings\Application Data\Opera\Opera\profile\opcache\assoc\ \Device\HarddiskVolume1\Documents and Settings\kulich\Local Settings\Application Data\Opera\Opera\profile\vps\ |
| 0000 | 0000 |
| \Device\HarddiskVolume1\Documents and Settings\kulich\Local Settings\Application Data\Opera\Opera\profile\vps\0000\ | \Device\HarddiskVolume1\Documents and Settings\kulich\Local Settings\Application Data\Opera\Opera\profile\vps\0000\ |
| adoc.bx | adoc.bx |
| adoc.bx-j | adoc.bx-j |
| md.dat | md.dat |
| md.dat-j | md.dat-j |
| url.ax | url.ax |
| url.ax-j | url.ax-j |
| w.ax | w.ax |
| w.ax-j | w.ax-j |
| wb.vx | wb.vx |
| wb.vx-j | wb.vx-j |
| **\Device\HarddiskVolume1\GIMMI\OPERAS\** | |
| **951** | |
| **\Device\HarddiskVolume1\GIMMI\OPERAS\951\** | |
| \Device\HarddiskVolume1\PROGRAM | \Device\HarddiskVolume1\PROGRAM |

| FILES\ | FILES\ |
|---|---|
| \Device\HarddiskVolume1\PROGRAM FILES\OPERA\ | \Device\HarddiskVolume1\PROGRAM FILES\OPERA\ |
| ENCODING.BIN | ENCODING.BIN |
| ENGLISH.LNG | ENGLISH.LNG |
| OPERA.DLL | OPERA.DLL |
| OPERA.EXE | OPERA.EXE |
| OPERADEF6.INI | OPERADEF6.INI |
| SEARCH.INI | SEARCH.INI |
| \Device\HarddiskVolume1\PROGRAM FILES\OPERA\DEFAULTS\ | \Device\HarddiskVolume1\PROGRAM FILES\OPERA\DEFAULTS\ |
| DIALOG.INI | DIALOG.INI |
| FASTFORWARD.INI | FASTFORWARD.INI |
| PLUGIN-IGNORE.INI | PLUGIN-IGNORE.INI |
| SPELLCHECK.INI | SPELLCHECK.INI |
| STANDARD_KEYBOARD.INI | STANDARD_KEYBOARD.INI |
| STANDARD_MENU.INI | STANDARD_MENU.INI |
| STANDARD_MOUSE.INI | STANDARD_MOUSE.INI |
| STANDARD_TOOLBAR.INI | STANDARD_TOOLBAR.INI |
| STANDARD_VOICE.INI | STANDARD_VOICE.INI |
| **\Device\HarddiskVolume1\PROGRAM FILES\OPERA\LOCALE\** | |
| \Device\HarddiskVolume1\PROGRAM FILES\OPERA\LOCALE\RU\ | \Device\HarddiskVolume1\PROGRAM FILES\OPERA\LOCALE\RU\ |
| RU.LNG | RU.LNG |
| \Device\HarddiskVolume1\PROGRAM FILES\OPERA\PROGRAM\ \Device\HarddiskVolume1\PROGRAM FILES\OPERA\PROGRAM\PLUGINS\ \Device\HarddiskVolume1\PROGRAM FILES\OPERA\SKIN\ | \Device\HarddiskVolume1\PROGRAM FILES\OPERA\PROGRAM\ \Device\HarddiskVolume1\PROGRAM FILES\OPERA\PROGRAM\PLUGINS\ \Device\HarddiskVolume1\PROGRAM FILES\OPERA\SKIN\ |
| STANDARD_SKIN.ZIP | STANDARD_SKIN.ZIP |
| \Device\HarddiskVolume1\PROGRAM | \Device\HarddiskVolume1\PROGRAM |
| FILES\OPERA\STYLES\ | FILES\OPERA\STYLES\ |
| CONTENTBLOCK.CSS | CONTENTBLOCK.CSS |
| MATHML.CSS | MATHML.CSS |
| WML.CSS | WML.CSS |
| VDevice\HarddiskVolume1\PROGRAM FILES\OPERA\STYLES\USER\ | \Device\HarddiskVolume1\PROGRAM FILES\OPERA\STYLES\USER\ |
| DISABLEBREAKS.CSS | DISABLEBREAKS.CSS |
| DISABLEFLOATS.CSS | DISABLEFLOATS.CSS |
| DISABLEFORMS.CSS | DISABLEFORMS.CSS |
| DISABLEPOSITIONING.CSS | DISABLEPOSITIONING.CSS |
| DISABLETABLES.CSS | DISABLETABLES.CSS |
| TABLELAYOUT.CSS | TABLELAYOUT.CSS |
| \Device\HarddiskVolume1\PROGRA∼1\ \Device\HarddiskVolume1\PROGRA∼1\KA SPER∼1\ | \Device\HarddiskVolume1\PROGRA∼1\ \Device\HarddiskVolume1\PROGRA∼1\K ASPER∼1\ |
| \Device\HarddiskVolume1\PROGRA∼1\KA SPER∼1\KASPER∼1\ | \Device\HarddiskVolume1\PROGRA∼1\K ASPER∼1\KASPER∼1\ |

Opera 9.5.1 wrote some data into its own folder **Device\HarddiskVolume1\GIMMI\OPERAS\,** while the new version does not write to that folder.

Another example is where the new version has an expanded caching mechanism (the new version stores more data in the cache in the folder \Device\HarddiskVolume1\DOCUMENTS AND SETTINGS\KULICH\LOCAL SETTINGS\APPLICATIONDATA\OPERA\OPERA\PROFILE\CACHE4\):

| **Opera 9.5.1** | **Unknown program (probably new version of Opera)** |
|---|---|
| \Device\HarddiskVolume1\DOCUMENTS AND SETTINGS\KULICH\LOCAL SETTINGS\APPLICATION DATA\OPERA\OPERA\PROFILE\ | \Device\HarddiskVolume1\DOCUMENTS AND SETTINGS\KULICH\LOCAL SETTINGS\APPLICATION DATA\OPERA\OPERA\PROFILE\ |
| \Device\HarddiskVolume1\DOCUMENTS AND SETTINGS\KULICH\LOCAL SETTINGS\APPLICATION DATA \OPERA\OPERA \PROFILE\CACH E4\ | \Device\HarddiskVolume1\DOCUMENTS AND SETTINGS\KULICH\LOCAL SETTINGS\APPLICATION DATA \OPERA \OPERA \PROFILE\CACH E4\ |
| DCACHE4.URL | DCACHE4.URL |
| OPR00002 | OPR00002 |
| OPR00003 | OPR00003 |
| OPR00009 | OPR00009 |
| OPR0000A | OPR0000A |
| OPR0000B | OPR0000B |
| OPR0000F | OPR0000F |
| OPR0000Y | OPR0000Y |
| OPR0000Z | OPR0000Z |
| OPR00010 | OPR00010 |
| OPR00011 | OPR00011 |
| | **OPR00012** |
| OPR00014 | OPR00014 |
| OPR00015 | OPR00015 |
| | **OPR00016** |
| | **OPR00017** |
| OPR00018 | OPR00018 |
| | **OPR00019** |
| | **OPR0001B** |
| OPR0001C | OPR0001C |
| | **OPR0001D** |
| OPR0001E | OPR0001E |
| | **OPR0001F** |
| OPR0001G | OPR0001G |
| OPR0001H | OPR0001H |
| OPR0001I | OPR0001I |
| OPR0001K | OPR0001K |
| | **OPR0001L** |
| OPR0001N | OPR0001N |
| OPR0001P | OPR0001P |
| OPR0001Q | OPR0001Q |
| OPR0001R | OPR0001R |
| OPR0001T | OPR0001T |
| OPR0001U | OPR0001U |
| OPR0001W | OPR0001W |
| OPR0001X | OPR0001X |
| OPR0001Y | OPR0001Y |
| OPR0000IZ | OPR0001Z |
| OPR00020 | OPR00020 |
| OPR00021 | OPR00021 |
| OPR00022 | OPR00022 |
| OPR00023 | OPR00023 |
| OPR00024 | OPR00024 |
| OPR0002E | OPR0002E |
| OPR0002Z | OPR0002Z |
| OPR00030 | OPR00030 |
| OPR00031 | OPR00031 |
| | **OPR00033** |
| OPR00034 | OPR00034 |
| OPR00035 | OPR00035 |
| OPR00036 | OPR00036 |
| | **OPR00037** |
| OPR00038 | OPR00038 |
| OPR0003A | OPR0003A |
| | **OPR0003B** |
| OPR0003F | OPR0003F |
| OPR0003H | OPR0003H |
| | **OPR0003K** |
| | **OPR0003L** |
| OPR0003M | OPR0003M |
| OPR0003N | OPR0003N |
| OPR0003O | OPR00030 |
| OPR0003P | OPR0003P |
| OPR0003Q | OPR0003Q |
| OPR0003R | OPR0003R |
| OPR0003S | OPR0003S |
| | **OPR0003T** |
| | **OPR0003U** |
| OPR0003W | OPR0003W |
| OPR0003X | OPR0003X |
| OPR0003Y | OPR0003Y |
| OPR0003Z | OPR0003Z |
| OPR00041 | OPR00041 |
| OPR00043 | OPR00043 |
| OPR00044 | OPR00044 |
| OPR00045 | OPR00045 |
| OPR00046 | OPR00046 |
| OPR0004D | OPR0004D |
| OPR00052 | OPR00052 |
| OPR00053 | OPR00053 |
| OPR0005Q | OPR0005Q |
| | **OPR00064** |
| | **OPR00067** |
| | **OPR0006N** |
| | **OPR0006O** |
| | **OPR0006Z** |
| | **OPR00070** |
| \Device\HarddiskVolume1\DOCUMENTS AND SETTINGS\KULICH\LOCAL SETTINGS\APPLICATION DATA\OPERA\OPERA\PROFILE\CACH E4\REVOCATION\ | \Device\HarddiskVolume1\DOCUMENTS AND SETTINGS\KULICH\LOCAL SETTINGS\APPLICATION DATA \OPERA\OPERA \PROFILE\CACH E4\REVOCATION\ |
| DCACHE4.URL | DCACHE4.URL |
| VLINK4.DAT | VLINK4.DAT |

All the above examples show "good" changes (i.e., they use only resources of the Opera browser itself), and therefore, it can be concluded that this is a new version of Opera. On the other hand, if the new version had, for example, the following activities:
- Use of system folders
- Changing of drivers
- Use of binary files

Then it could be concluded that this is malicious activity, and the browser is infected. Other examples of malicious activities in the Opera browser are those affecting the following:
DeviceHardDiskVolume1\windows\system32
notepad.exe
regedit.exe
calc.exe
DeviceHardDiskVolume1\windows\system32\drivers
Acpi.sys
http.sys
beep.sys

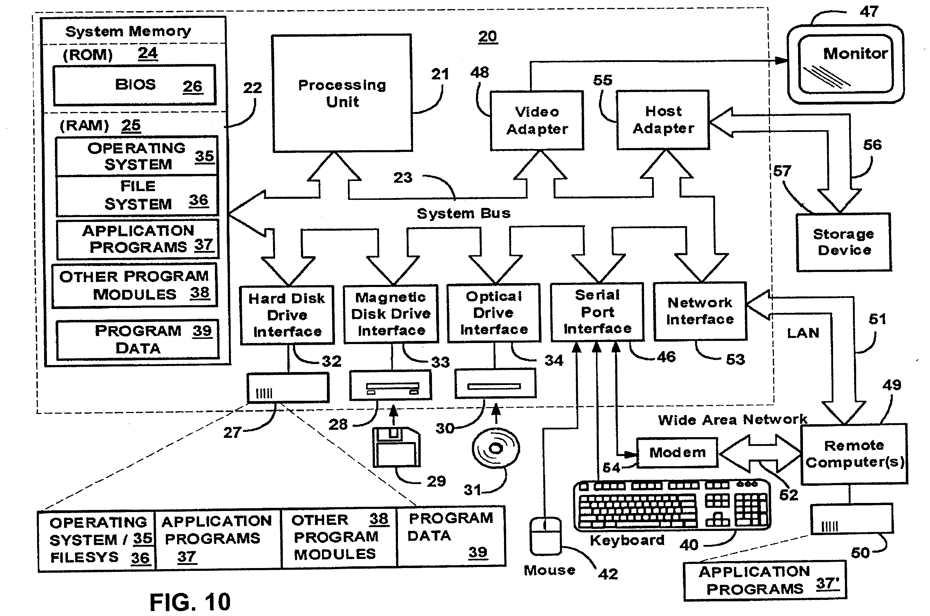

With reference to **FIG. 10****,** an exemplary system for implementing the invention includes a general purpose computing device in the form of a computer or server **20** or the like, including a processing unit **21,** a system memory **22,** and a system bus **23** that couples various system components including the system memory to the processing unit **21.** The system bus **23** may be any of several types of bus structures including a memory bus or memory controller, a peripheral bus, and a local bus using any of a variety of bus architectures. The system memory includes read-only memory (ROM) **24** and random access memory (RAM) **25.** A basic input/output system **26** (BIOS), containing the basic routines that help transfer information between elements within the computer **20,** such as during start-up, is stored in ROM **24.**

The computer **20** may further include a hard disk drive **27** for reading from and writing to a hard disk, not shown, a magnetic disk drive **28** for reading from or writing to a removable magnetic disk **29,** and an optical disk drive **30** for reading from or writing to a removable optical disk **31** such as a CD-ROM, DVD-ROM or other optical media. The hard disk drive **27,** magnetic disk drive **28,** and optical disk drive **30** are connected to the system bus **23** by a hard disk drive interface **32,** a magnetic disk drive interface **33,** and an optical drive interface **34,** respectively. The drives and their associated computer-readable media provide a non-volatile storage of computer readable instructions, data structures, program modules and other data for the computer **20.**

Although the exemplary environment described herein employs a hard disk, a removable magnetic disk **29** and a removable optical disk **31,** it should be appreciated by those skilled in the art that other types of computer readable media that can store data that is accessible by a computer, such as magnetic cassettes, flash memory cards, digital video disks, Bernoulli cartridges, random access memories (RAMs), read-only memories (ROMs) and the like may also be used in the exemplary operating environment.

A number of program modules may be stored on the hard disk, magnetic disk **29,** optical disk **31,** ROM **24** or RAM **25,** including an operating system **35.** The computer **20** includes a file system **36** associated with or included within the operating system **35,** one or more application programs **37,** other program modules **38** and program data **39.** A user may enter commands and information into the computer **20** through input devices such as a keyboard **40** and pointing device **42.** Other input devices (not shown) may include a microphone, joystick, game pad, satellite dish, scanner or the like.

These and other input devices are often connected to the processing unit **21** through a serial port interface **46** that is coupled to the system bus, but may be connected by other interfaces, such as a parallel port, game port or universal serial bus (USB). A monitor **47** or other type of display device is also connected to the system bus **23** via an interface, such as a video adapter **48.** In addition to the monitor **47,** personal computers typically include other peripheral output devices (not shown), such as speakers and printers.

The computer **20** may operate in a networked environment using logical connections to one or more remote computers **49.** The remote computer (or computers) **49** may be another computer, a server, a router, a network PC, a peer device or other common network node, and typically includes many or all of the elements described above relative to the computer **20,** although only a memory storage device **50** has been illustrated. The logical connections include a local area network (LAN) **51** and a wide area network (WAN) **52.** Such networking environments are commonplace in offices, enterprise-wide computer networks, Intranets and the Internet.

When used in a LAN networking environment, the computer **20** is connected to the local network **51** through a network interface or adapter **53.** When used in a WAN networking environment, the computer **20** typically includes a modem **54** or other means for establishing communications over the wide area network **52,** such as the Internet. The modem **54,** which may be internal or external, is connected to the system bus **23** via the serial port interface **46.** In a networked environment, program modules depicted relative to the computer **20,** or portions thereof, may be stored in the remote memory storage device. It will be appreciated that the network connections shown are exemplary and other means of establishing a communications link between the computers may be used.

Having thus described a preferred embodiment, it should be apparent to those skilled in the art that certain advantages of the described method and apparatus have been achieved. In particular, those skilled in the art would appreciate that the proposed system and method provide for an effective, on-the-fly detection of malware based on asynchronous processing of events generated by applications running on a computer system.

The invention is further defined by the following claims.

## Claims

1. A method for asynchronous processing of system events (210) on a computer system, the method comprising:
(a) detecting a system event (210) on the computer system and intercepting the system event for filtering, wherein the system event (210) comprises a system call;
(b) filtering the system event (210) through at least one filter (240) to determine if the system event (210) matches a security criteria;
(c) if the system event (210) does not pass through at least one filter (240), sending the system event for further processing; and
if the system event (210) passes through the at least one filter (240), creating a copy of the system event (210) which is passed through the at least one filter (240) for asynchronous anti-virus processing the copy of the system event (210), and releasing the original system event (210) so that the process which caused the event continues its uninterrupted execution;
(d) placing the copy of the system event (210) into a queue for asynchronous anti-virus processing;
(e) creating a control record based on the event copy by using information about the event;
(f) deleting the copy of the system event (210) from the queue;
(g) performing asynchronous anti-virus processing on the control record of the system event (210), wherein the asynchronous anti-virus processing of the control record comprises a signature scanning of the control record of the system event (210) and analyzing the process that caused the system event by executing the process in an emulator and by generating a behavior log for the process and terminating the process that caused the system event (210), if the anti-virus processing reveals a malicious nature of the system event (210); and
(h) for a process that has behavior differences compared to a previous known non-malicious version of the process but also substantial similarities to the previous known non-malicious process, classifying the process as non-malicious.

2. The method of claim 1, wherein the behavior log is used for the anti-virus check of:
network configurations;
a web site.

3. The method of claim 1, wherein the processing of the behavior log comprises any of:
a signature detection;
a system event (210) emulation; and
a heuristic detection.

4. The method of claim 1, wherein the processing of the copy of the system event (210) further comprises adding the object, which caused the system event (210), to a white list or to a black list, based on the degree of similarity to a previously known object.

5. The method of claim 4, wherein the white list and the black list are analyzed to detect collisions between the white list and the black list.

6. A system for asynchronous processing of system events (210), the system comprising a processor, a memory coupled to the processor, and computer code loaded into the memory for implementing the steps of claim 1.

7. The system of claim 6, wherein processing of a process that caused the system event (210) by an application module determines if the process that caused the system event (210) is malicious.

8. The system of claim 7, wherein if the process that caused the system event (210) is deemed malicious, activity of the process that caused the system event (210) is terminated.

9. The system of claim 7, wherein if the process that caused the system event (210) is deemed malicious, functionality of the process that caused the system event (210) is restricted.

10. The system of claim 7, wherein the application modules are any of:
a firewall;
an anti-virus module;
a HIPS (host intrusion protection system);
a web anti-virus;
a mail anti-virus;
a traffic anti-virus;
a script anti-virus;
an emulator; and
a PDM (proactive defense module).

11. The system of claim 6, wherein the filters (240) allow through the core system events (210).

12. The system of claim 6, wherein the system events (210) are anti-virus-checked if they pass through the filters (240).

## Patentansprüche

1. Verfahren zum asynchronen Verarbeiten von Systemereignissen (210) auf einem Computersystem, wobei das Verfahren umfasst:
(a) Erfassen eines Systemereignisses (210) auf dem Computersystem und Abfangen des Systemereignisses zum Filtern, wobei das Systemereignis (210) einen Systemaufruf umfasst;
(b) Filtern des Systemereignisses (210) durch wenigstens einen Filter (240), um zu bestimmen, ob das Systemereignis (210) zu einem Sicherheitskriterium passt;
(c) falls das Systemereignis (210) wenigstens einen Filter (240) nicht passiert, Senden des Systemereignisses zum weiteren Verarbeiten; und
falls das Systemereignis (210) den wenigstens einen Filter (240) passiert, Erzeugen einer Kopie des Systemereignisses (210), das den wenigstens einen Filter (240) passiert hat, zum asynchronen Antivirus-Verarbeiten der Kopie des Systemereignisses (210), und Freigeben des ursprünglichen Systemereignisses (210), so dass der das Ereignis verursachende Prozess seine nicht unterbrochene Ausführung fortsetzt;
(d) Setzen der Kopie des Systemereignisses (210) in eine Warteschleife zum asynchronen Antivirus-Verarbeiten;
(e) Erzeugen eines Kontrollsatzes basierend auf der Ereigniskopie durch Verwenden von Informationen über das Ereignis;
(f) Löschen der Kopie des Systemereignisses (210) aus der Warteschleife;
(g) Durchführen eines asynchronen Antivirus-Verarbeitens an dem Kontrollsatz des Systemereignisses (210), wobei das asynchrone Antivirus-Verarbeiten des Kontrollsatzes ein Signatur-Scannen des Kontrollsatzes des Systemereignisses (210) und ein Analysieren des das Systemereignis verursachenden Prozesses durch Ausführen des Prozesses in einem Emulator und durch Erzeugen eines Verhaltensprotokolls für den Prozess und ein Beenden des das Systemereignis (210) verursachenden Prozesses umfasst, falls das Antivirus-Verarbeiten einen schädlichen Charakter des Systemereignisses (210) offenbart; und
(h) für einen Prozess, der verglichen mit einer vorherigen bekannten nicht schädlichen Version des Prozesses Verhaltensunterschiede, aber auch wesentliche Ähnlichkeiten mit dem vorherigen bekannten nicht schädlichen Prozess aufweist, Klassifizieren des Prozesses als nicht schädlich.

2. Verfahren nach Anspruch 1, wobei das Verhaltensprotokoll für die Antivirus-Überprüfung verwendet wird von:
Netzwerk-Konfigurationen;
einer Webseite.

3. Verfahren nach Anspruch 1, wobei das Verarbeiten des Verhaltensprotokolls irgendeines umfasst von:
einer Signaturerfassung;
einer Systemereignis(210)-Emulation; und
einer heuristischen Erfassung.

4. Verfahren nach Anspruch 1, wobei das Verarbeiten der Kopie des Systemereignisses (210) ferner ein Hinzufügen des das Systemereignis (210) verursachenden Objekts zu einer White List oder zu einer Black List basierend auf dem Grad einer Ähnlichkeit mit einem zuvor bekannten Objekt umfasst.

5. Verfahren nach Anspruch 4, wobei die White List und die Black List analysiert werden, um Kollisionen zwischen der White List und der Black List zu erfassen.

6. System zum asynchronen Verarbeiten von Systemereignissen (210), wobei das System einen Prozessor, einen mit dem Prozessor gekoppelten Speicher, und einen in den Speicher geladenen Computer-Code zum Implementieren der Schritte von Anspruch 1 umfasst.

7. System nach Anspruch 6, wobei ein Verarbeiten eines das Systemereignis (210) verursachenden Prozesses durch ein Anwendungsmodul bestimmt, ob der das Systemereignis (210) verursachende Prozess schädlich ist.

8. System nach Anspruch 7, wobei, falls der das Systemereignis (210) verursachende Prozess als schädlich erachtet wird, die Aktivität des das Systemereignis (210) verursachenden Prozesses beendet wird.

9. System nach Anspruch 7, wobei, falls der das Systemereignis (210) verursachende Prozess als schädlich erachtet wird, die Funktionalität des das Systemereignis (210) verursachenden Prozesses eingeschränkt wird.

10. System nach Anspruch 7, wobei die Anwendungsmodule irgendeines sind von:
einer Firewall;
einem Antivirus-Modul;
einem HIPS (Host Intrusion Protection System);
einem Web-Antivirus;
einem Mail-Antivirus;
einem Traffic-Antivirus;
einem Script-Antivirus;
einem Emulator; und
einem PDM (Proactive Defense Module).

11. System nach Anspruch 6, wobei die Filter (240) die Core-Systemereignisse (210) durchlassen.

12. System nach Anspruch 6, wobei die Systemereignisse (210) antivirus-überprüft werden, falls sie die Filter (240) passieren.

## Revendications

1. Un procédé de traitement asynchrone d'événements système (210) sur un système informatique, le procédé comprenant :
(a) la détection d'un événement système (210) sur le système informatique et l'interception de l'événement système à des fins de filtrage, l'événement système (210) comprenant un appel système,
(b) le filtrage de l'événement système (210) au travers d'au moins un filtre (240) de façon à déterminer si l'événement système (210) correspond à un critère de sécurité,
(c) si l'événement système (210) ne passe pas avec succès au travers d'au moins un filtre (240), l'envoi de l'événement système à des fins de traitement complémentaire, et
si l'événement système (210) passe avec succès au travers du au moins un filtre (240), la création d'une copie de l'événement système (210) qui est passé avec succès au travers du au moins un filtre (240) pour un traitement anti-virus asynchrone de la copie de l'événement système (210), et la libération de l'événement système d'origine (210) de sorte que le processus qui a provoqué l'événement poursuive son exécution de manière ininterrompue,
(d) le placement de la copie de l'événement système (210) dans une file d'attente à des fins d'un traitement anti-virus asynchrone,
(e) la création d'un enregistrement de contrôle basé sur la copie de l'événement au moyen d'informations relatives à l'événement,
(f) l'effacement de la copie de l'événement système (210) de la file d'attente,
(g) l'exécution d'un traitement anti-virus asynchrone sur l'enregistrement de contrôle de l'événement système (210), le traitement anti-virus asynchrone de l'enregistrement de contrôle comprenant un balayage à la recherche de signatures de l'enregistrement de contrôle de l'événement système (210) et l'analyse du processus qui a provoqué l'événement système par l'exécution du processus dans un émulateur et par la génération d'un journal de comportement pour le processus et la terminaison du processus qui a provoqué l'événement système (210) si le traitement anti-virus révèle une nature malveillante de l'événement système (210), et
(h) pour un processus qui présente des différences de comportement en comparaison d'une version non malveillante connue antérieure du processus mais également des similarités substantielles avec le processus non malveillant connu antérieur, le classement du processus en tant que processus non malveillant.

2. Le procédé selon la revendication 1, dans lequel le journal de comportement est utilisé pour le contrôle anti-virus :
de configurations réseau,
d'un site web.

3. Le procédé selon la revendication 1, dans lequel le traitement du journal de comportement comprend une opération quelconque parmi :
une détection de signature,
une émulation d'événement système (210), et
une détection heuristique.

4. Le procédé selon la revendication 1, dans lequel le traitement de la copie de l'événement système (210) comprend en outre l'ajout de l'objet qui a provoqué l'événement système (210) à une liste blanche ou à une liste noire en fonction du degré de similarité avec un objet connu antérieurement.

5. Le procédé selon la revendication 4, dans lequel la liste blanche et la liste noire sont analysées de façon à détecter des collisions entre la liste blanche et la liste noire.

6. Un système de traitement asynchrone d'événements système (210), le système comprenant un processeur, une mémoire couplée au processeur et du code informatique chargé dans la mémoire destiné à la mise en oeuvre des étapes selon la revendication 1.

7. Le système selon la revendication 6, dans lequel le traitement d'un processus qui a provoqué l'événement système (210) par un module d'application détermine si le processus qui a provoqué l'événement système (210) est malveillant.

8. Le système selon la revendication 7, dans lequel, si le processus qui a provoqué l'événement système (210) est considéré malveillant, l'activité du processus qui a provoqué l'événement système (210) est terminée.

9. Le système selon la revendication 7, dans lequel, si le processus qui a provoqué l'événement système (210) est considéré malveillant, la fonctionnalité du processus qui a provoqué l'événement système (210) est restreinte.

10. Le système selon la revendication 7, dans lequel les modules d'application sont un module quelconque parmi :
un pare-feu,
un module anti-virus,
un HIPS (système de protection contre les intrusions hôte),
un anti-virus web,
un anti-virus de courrier électronique,
un anti-virus de trafic,
un anti-virus de scripts,
un émulateur, et
un PDM (module de défense proactif).

11. Le système selon la revendication 6, dans lequel les filtres (240) permettent le passage des événements système noyaux (210).

12. Le système selon la revendication 6, dans lequel les événements systèmes (210) subissent un contrôle anti-virus s'ils passent avec succès au travers des filtres (240).
